# EUROPÄISCHE PATENTSCHRIFT

(11) **EP 2 428 347 B1**
(45) Veröffentlichungstag und Bekanntmachung des Hinweises auf die Patenterteilung: **09.05.2018**
(21) Anmeldenummer: 11180301.1
(22) Anmeldetag: 07.09.2011
(51) Int. Cl.: B29C 49/64, B29C 49/42, B29C 49/68, B29C 49/06

(54) **Vorrichtung und Verfahren zur Herstellung ovaler Kunststoffbehältnisse**
Device and method for producing oval plastic containers
Dispositif et procédé destinés à la fabrication de récipients ovales en matière plastique

(30) Priorität: 09.09.2010 DE 102010044833
(43) Veröffentlichungstag der Anmeldung: 14.03.2012
(73) Patentinhaber: Krones AG, 93073 Neutraubling (DE)
(72) Erfinder: Schmitt, Robert, 93073 Neutraubling (DE); Voth, Klaus, 93073 Neutraubling (DE); Hüttner, Gerald, 93073 Neutraubling (DE); Förster, Michael, 93073 Neutraubling (DE); Martinsen, Lothar, 93073 Neutraubling (DE)
(74) Vertreter: Bittner, Bernhard

(56) Entgegenhaltungen:
- WO-A1-2005/097466
- DE-A1-102006 026 885

## Beschreibung

Die vorliegende Erfindung bezieht sich auf eine Vorrichtung und ein Verfahren zum Herstellen von Kunststoffbehältnissen. Aus dem Stand der Technik sind derzeitige Verfahren seit langem bekannt. Dabei werden Kunststoffvorformlinge beispielsweise aus PET, welche üblicherweise kreisförmige Querschnitte aufweisen, zunächst erwärmt und anschließend innerhalb einer Blasform zu Kunststoffbehältnissen expandiert. Im Laufe dieses Expansionsvorgangs werden diese Kunststoffbehältnisse mit Druckluft beaufschlagt, um auf diese Weise gegen die Innenwandung der Blasform expandiert zu werden.

Teilweise werden im Markt jedoch Kunststoffbehältnisse gefordert, welche keinen kreisförmigen Querschnitt aufweisen, sondern einen hiervon abweichenden Querschnitt, wie beispielsweise eine ovale Grundform. Auch zum Herstellen derartiger Kunststoffbehältnisse sind aus dem Stand der Technik mehrere Verfahren bekannt. So ist es beispielsweise bekannt, dass bestimmte Bereiche der Außenwandung der Kunststoffvorformlinge stärker erwärmt werden, damit sie sich beim anschließenden Streckblasvorgang stärker ausdehnen, so dass insgesamt eine von einem kreisförmigen Querschnitt abweichende Flaschenform entsteht.

Dieser Vorgang wird im Stand der Technik auch als "preferential heating" bezeichnet.

Aus der JP 08174552 A ist eine Blasformvorrichtung bekannt. Dabei sind wärmeisolierende verstärkende Materialien eingesetzt, so dass die Form insgesamt eine Doppelstruktur aufweist. Weiterhin sind Heizeinrichtungen und Wasserlöcher für Kühlwasser vorgesehen. Die JP 63207630 A beschreibt ebenfalls eine Möglichkeit, um eine Dicke in einer Umfangsrichtung einer Flasche zu steuern. Dabei ist hier ebenfalls eine elliptische Blasform vorgesehen. Aus der US 4,380,526 ist die Vorrichtung und ein Verfahren zum Herstellen von nichtzylindrischen Artikeln aus Vorformlingen aus PET bekannt. Dabei werden Blasformen eingesetzt, welche selbst einen elliptischen Querschnitt aufweisen. Die Oberfläche der Blasform, gegen welche das thermoplastische Material gedrängt wird, kann dabei Auswirkungen auf die Formgebung haben. Hierzu wird vorgeschlagen, ein wärmeisolierendes Material in dem Bereich, der den Behälter ausbildet, anzubringen. Dieses Teflonmaterial soll dabei den Reibungskoeffizienten mit dem Kunststoffmaterial des Kunststoffvorformlings verbessern und einen Wärmeübergang von dem Material des Vorformlings auf die Blasform reduzieren.

In der bisher noch unveröffentlichten deutschen Patentanmeldung DE 10 2009 021 792.4 der Anmelderin wurde ein Verfahren beschrieben, bei dem die Kunststoffvorformlinge mittels eines Kontaktelementes partiell berührt und auf diese Weise temperiert werden. Der Offenbarungsgehalt dieser Anmeldung wird hiermit durch Bezugnahme voll umfänglich auch zum Gegenstand der vorliegenden Anmeldung gemacht.

DE102006026885 A offenbart eine Vorrichtung zum Temperieren von Kunststoffvorformlingen gemäß dem Oberbegriff des Anspruchs 1. Der vorliegenden Erfindung liegt die Aufgabe zugrunde eine Vorrichtung und ein Verfahren zur Verfügung zu stellen, welche die Herstellung ovaler Behältnisse erlauben bzw. einfacher gestalten.

Dies wird erfindungsgemäß durch eine Vorrichtung zum Temperieren von Kunststoffvorformlingen gemäß Anspruch 1 erreicht. Unter einem Temperieren der Außenwand wird erfindungsgemäß verstanden, dass zuvor erwärmte Kunststoffvorformlinge in bevorzugten Bereichen gegenüber der Erwärmungstemperatur abgekühlt werden, oder dass bestimmte Bereiche des Kunststoffvorformlings zusätzlich erwärmt werden, damit diese Bereiche bei der Verstreckung eine höhere Ausdehnung erfahren. Unter einer Temperierform wird dabei eine Form verstanden, in welche bevorzugt der Kunststoffvorformling mit einem vorgegebenen Bereich, beispielsweise einem Grundkörper, der unterhalb eines Gewindes oder eines Tragrings des Kunststoffvorformlings liegt, eingebracht wird. Insbesondere wird jedoch durch den Kontakt des Kunststoffvorformlings dessen Wandungstemperatur in dem kontaktierten Bereich geändert. Unter einer Relativbewegung zwischen den Kunststoffvorformlingen wird verstanden, dass zum Zuführen entweder der Kunststoffvorformling selbst oder wenigstens eines der beiden Formteile entsprechend bewegt wird, wobei es auch denkbar ist, dass sowohl der Kunststoffvorformling, als auch das wenigstens eine Formteil bewegt wird. Unter einer Bewegung in der Längsrichtung des Kunststoffvorformlings wird verstanden, dass sich wenigstens eine Bewegungskomponente eines Abschnitts des Formteils in der Längsrichtung bewegt.

So ist es beispielsweise möglich, dass der Kunststoffvorformling selbst in der Längsrichtung oder schräg zur Längsrichtung bewegt wird, es wäre jedoch auch möglich, dass die Temperierform bzw. die Formteile in der besagten Längsrichtung bewegt werden. Auch wäre es möglich, dass die Formteile um eine Achse geschwenkt werden, derart, dass zumindest Abschnitte der Formteile auch Bewegungskomponenten in der Längsrichtung des Kunststoffvorformlings erfahren.

Bei der Längsrichtung des Kunststoffvorformlings handelt es sich insbesondere um eine Längsachse, die insbesondere auch eine Symmetrieachse des Kunststoffvorformlings ausbildet. Bei einer weiteren vorteilhaften Ausführungsform weist die Temperierform wenigstens einen Kanal zum Führen eines fließfähigen Temperiermediums auf. Bei diesem fließfähigen Temperiermedium kann es sich beispielsweise um Öl oder Wasser handeln. Durch das Führen dieses Temperiermediums kann die Temperierform bzw. deren Formteile auf einer vorbestimmten Temperatur gehalten werden, welche zum Temperieren der Außenwand der Kunststoffvorformlinge verwendet wird.

Vorteilhaft bewegt die Bewegungseinrichtung entweder den Kunststoffvorformling oder wenigstens ein Formteil, um den Kunststoffvorformling der Temperierform zuzuführen. Vorteilhaft bewegt die Bewegungseinrichtung auch entweder den Kunststoffvorformling oder wenigstens ein Formteil, um den temperierten Kunststoffvorformling der Temperierform zu entnehmen.

Vorzugsweise bewegt sich wenigstens ein Formteil wenigstens abschnittsweise mit dem Kunststoffvorformling mit, bzw. das besagte Formteil bewegt sich wenigstens abschnittsweise entlang des Transportpfades, auf welchem auch der Kunststoffvorformling bewegt wird. Damit ist besonders vorteilhaft wenigstens ein Formteil entlang des Transportpfades der Kunststoffvorformlinge nicht stationär angeordnet.

Vorteilhaft weist die Vorrichtung ein zweites Formteil auf, und dieses zweite Formteil ist besonders bevorzugt relativ bezüglich des ersten Formteils beweglich. Besonders vorteilhaft kontaktiert das zweite Formteil zeitweise einen zweiten Wandabschnitt des Kunststoffvorformlings um diesen zweiten Wandabschnitt zu temperieren. Dieser zweite Wandabschnitt unterscheidet sich dabei bevorzugt von dem ersten von dem ersten Formteil kontaktierten Wandabschnitt. Bei dieser Ausgestaltung wirken also besonders bevorzugt die beiden Formteile zum Temperieren des Kunststoffvorformlinge zusammen. Es wäre jedoch auch möglich, dass mehr als zwei Formteile vorgesehen sind.

Auch wäre es möglich, dass die Vorrichtung eine Halteeinrichtung aufweist, welche den Kunststoffvorformling hält und lediglich ein Formteil vorgesehen ist, welches den besagten Bereich der Aussenwand des Kunststoffvorformlings kontaktiert um diesen zu temperieren.

Vorteilhaft handelt es sich bei dem wenigstens einen Formteil um ein Formteil, welches einen Bereich der Seitenwandung des Kunststoffvorformlings kontaktiert. Es könnte jedoch alternativ oder zusätzlich auch ein Formteil vorgesehen sein, welches einen Bodenbereich des Kunststoffvorformlings kontaktiert, um ein Temperaturprofil auf diesen Bodenbereich aufzubringen. Ein derartiges den Bodenbereich des Kunststoffvorformlings kontaktierendes Formteil könnte dabei beispielsweise mit einer Halteeinrichtung, welche den Kunststoffvorformling hält zusammenwirken.

Vorteilhaft ist das Formteil zumindest abschnittsweise mit den Kunststoffvorformlingen gemeinsam also insbesondere entlang eines Bewegungspfades der Kunststoffvorformlinge beweglich. Bevorzugt ist das wenigstens eine Formteil jedoch auch relativ bezüglich des Kunststoffvorformlings bewegbar. Die Temperierform kann dabei die Kunststoffvorformlinge in deren Umfangsrichtung vollständig umgeben, dies ist jedoch nicht unbedingt erforderlich. Es wäre auch möglich, dass die Temperierform nur einige Bereich des Kunststoffvorformlings umgibt, wie etwa einen Bodenbereich oder einen Wandungsabschnitt (ggfs. auch nur teilweise) in Umfangsrichtung.

Bei einer weiteren vorteilhaften Ausgestaltung umgeben die Formteile den Kunststoffvorformling in einem Temperierzustand in einem Umfangswinkel, der bezogen auf die Längsrichtung des Kunststoffvorformlings insgesamt zwischen 10° und 300°, bevorzugt zwischen 10° und 240° liegt. Auf diese Weise ist es möglich, dass große Bereiche in Umfangsrichtung des Kunststoffvorformlings temperiert werden, es wäre jedoch auch möglich, lediglich kleine Stege zu temperieren, wobei es auch möglich wäre, dass mehrere derartige Stege beispielsweise gleichmäßig in Umfangsrichtung verteilt vorliegen. Vorteilhaft erfolgt ein Temperieren des Kunststoffvorformlings entlang seiner gesamten Länge unterhalb des Gewindes bzw. Tragrings.

Bei einer weiteren vorteilhaften Ausführungsform weist die Vorrichtung eine Dreheinrichtung auf, welche den Kunststoffvorformling um seine Längsachse dreht. Im Stand der Technik sind auch solche Behältnisse bekannt, welche nicht nur einen ovalen Querschnitt aufweisen, sondern darüber hinaus auch einen Verschluss, der entsprechend oval ausgebildet ist. Dieser Verschluss muss in einem verschlossenen Zustand des Behältnisses in einem genauen Winkel bezüglich des Behältnisses angeordnet sein. Es wird daher vorgeschlagen, dass die Drehstellung des Kunststoffvorformlings genau vorgegeben wird, um auf diese Weise auch einen nicht kreisförmigen Verschluss in definierter Stellung aufzubringen.

Vorteilhaft wird dabei der Kunststoffvorformling vor der Temperierung um einen definierten Winkel gedreht, wobei zunächst mit einer Erfassungseinrichtung eine Stellung des Gewindes des Kunststoffvorformlings erfasst werden kann. Vorteilhaft weist die Dreheinrichtung einen Servomotor bzw. Schrittmotor auf, um genaue Drehstellungen des Kunststoffvorformlings festzulegen.

Vorteilhaft handelt es sich bei der Halteeinrichtung um einen Innen- bzw. einen Außengreifer, der besonders bevorzugt den Preform im Neckbereich von innen oder außen bzw. an einem Bereich seines Körpers greift, wobei dieser Bereich bevorzugt durch das Greifen gleichzeitig temperiert werden kann.

Bei einer weiteren vorteilhaften Ausführungsform weist die Halteeinrichtung einen in eine Mündung der Kunststoffvorformlinge einbringbaren Dorn auf. Dieser Dorn kann dabei den Kunststoffvorformling in besonders vorteilhafter Weise halten, ohne dass hierbei der Temperiervorgang behindert wird.

Vorteilhaft sind das erste Formteil und das zweite Formteil bezüglich einander in einer geraden Richtung beweglich. Vorteilhaft ist diese Richtung dabei im Wesentlichen senkrecht zu der Längsrichtung des Kunststoffvorformlings. Dies bedeutet, dass die beiden Formteile bzw. Temperierformen um die Kunststoffvorformlinge herum geschlossen werden.

Bei einer weiteren vorteilhaften Ausführungsform ist wenigstens ein Formteil um eine vorgegebene Schwenkachse schwenkbar. Auch auf diese Weise wird, wie oben erwähnt, eine teilweise Bewegung in der Längsrichtung des Kunststoffvorformlings erzeugt. Die Richtung der Schwenkachse ist dabei vorteilhaft senkrecht zu der Längsrichtung des Kunststoffvorformlings und bevorzugt dieser gegenüber versetzt.

Zur Temperierung der Formteile bestehen mehrere Möglichkeiten. So wäre es möglich, dass im Inneren der Formteile Kanäle für ein fließfähiges und insbesondere flüssiges Temperiermedium vorgesehen sind. Es wäre jedoch auch denkbar, dass die Temperierung elektrisch erfolgt. So könnten beispielsweise Peltier-Elemente vorgesehen sein, welche die Formteile oder wenigstens die Wandabschnitte, welche in Kontakt mit den Behältnissen kommen, kühlen. Auch wäre eine Erwärmung der besagten Wandabschnitte möglich.

Auch wäre es möglich, dass die Formteile selbst noch vorgegebene Konturen aufweisen. So wäre es möglich, dass ein erster Abschnitt eines Formteils, welcher in Kontakt mit dem Kunststoffvorformling gelangt, anders erwärmt wird, als ein anderer Abschnitt, der in Kontakt mit dem Kunststoffvorformling gelangt. Diese Unterabschnitte der Formteile können dabei auch unterschiedliche Größen und/oder auch im Arbeitsbetrieb unterschiedliche Temperaturen aufweisen. Auf dieser Weise können beispielsweise in den Behältniswandungen verbessert Stege ausgebildet werden.

Bei einer weiteren vorteilhaften Ausführungsform bewegt die Bewegungseinrichtung einen Kunststoffvorformling in seiner Längsrichtung und bringt ihn so zwischen die beiden Formteile.

Bei einer weiteren vorteilhaften Ausführungsform weist die Vorrichtung eine Transporteinrichtung zum Transportieren der Kunststoffvorformlinge entlang eines vorgegebenen Transportpfades auf. Vorteilhaft erfolgt das Temperieren der Kunststoffvorformlinge während dieses Transports. Bei einer weiteren vorteilhaften Ausführungsform weist die Vorrichtung eine Vielzahl der besagten Temperierformen auf. Vorteilhaft werden auch diese Temperierformen entlang des besagten Transportpfades transportiert. Dabei ist es möglich, dass eine Halteeinrichtung für die Kunststoffvorformlinge und die Temperierform auf einen gemeinsamen Träger angeordnet sind. Vorteilhaft kann es sich bei diesem Träger um einen drehbaren Träger handeln.

Die vorliegende Erfindung ist weiterhin auf eine Anlage zum Umformen von Kunststoffvorformlingen zu Kunststoffbehältnissen gerichtet. Diese Anlage weist dabei eine Erwärmungseinrichtung auf, welche die Kunststoffvorformlinge erwärmt und eine in einer Transportrichtung der Kunststoffvorformlinge nach dieser Erwärmungseinrichtung angeordnete Umformungseinrichtung zum Umformen der Kunststoffvorformlinge zu Kunststoffbehältnissen.

Erfindungsgemäß ist in der Transportrichtung der Kunststoffbehältnisse zwischen der Erwärmungseinrichtung und der Umformungseinrichtung wenigstens eine Vorrichtung zum Temperieren von Kunststoffvorformlingen der oben bezeichneten Art angeordnet. Dies bedeutet, dass zunächst ein Erwärmen der Kunststoffvorformlinge vorgenommen wird, anschließend ein partielles Temperieren und schließlich der eigentliche Umformungsvorgang mittels einer Blasform. Dabei sind jedoch die Blasform und die besagte Temperierform, wie erwähnt, hintereinander angeordnete Anlagenteile.

Bei einer weiteren vorteilhaften Ausführungsform ist ein Bypass vorgesehen, mittels dem die oben erwähnte Vorrichtung zum Temperieren der Kunststoffvorformlinge umgangen werden kann. Viele Hersteller von Getränkebehältnissen möchten neben den eingangs erwähnten nicht rotationssymmetrischen Behältnissen auch runde Behältnisse herstellen. Zur Herstellung derartiger runder Behältnisse ist die oben erwähnte Vorrichtung nicht erforderlich und wird daher vorzugsweise umgangen.

Es wäre jedoch auch möglich, dass derartige Behältnisse nicht durch einen Bypass transportiert werden, sondern durch die oben erwähnte Vorrichtung, jedoch von dieser nicht behandelt werden. Vorteilhaft ist dabei eine Steuereinirchtung vorgesehen, welche bewirkt, dass die Halteeinrichtungen mit den daran angeordneten Kunststoffvorformlingen nicht bis an die Kontaktierungselemente herangefahren werden sondern beispielsweise oberhalb derselben verbleiben. Auch wäre es möglich, dass in einem derartigen Arbeitsbetrieb, in dem runde Behältnisse gefertigt werden sollen, die Kontaktierungselemente bzw. die Formteile nicht auf die Kunststoffvorformlinge zugestellt werden.

Hierzu ist es denkbar, dass eine für diese Zustellung dienende Steuerkurve weggefahren bzw. deaktiviert wird. Falls motorische Antriebe für die Zustellung vorgesehen werden, können diese ebenfalls derart angesteuert werden, dass keine Zustellung erfolgt. So wäre es möglich, dass sich die Formteile nicht (insbesondere auf die Kunststoffvorformlinge zu) bewegen. Eine derartige Nicht-Zustellung kann insbesondere in solchen Fällen relevant sein, in denen keine axialen Bewegungen der Kunststoffvorformlinge durchgeführt werden, wie dies unten unter Bezugnahme auf die Figuren genauer erläutert wird.

Vorteilhaft ist die Vorrichtung zum Temperieren von Kunststoffvorformlingen daher derart steuerbar, dass vorgegebene Kunststoffvorformlinge oder Gruppen von Kunststoffvorformlingen nicht temperiert werden und insbesondere nicht von den Formteilen kontaktiert werden.

Vorteilhaft ist daher die Kontaktierung der Kunststoffvorformlinge durch die Formteile derart steuerbar bzw. die Vorrichtung derart steuerbar, dass die Temperierung der Kunststoffvorformlinge zugeschaltet oder abgeschaltet werden kan.

Bei einer weiteren vorteilhaften Ausführungsform weist die Vorrichtung ein Verdrehsicherungselement auf, welches ein Verdrehen des Kunststoffvorformlings gegenüber seiner Halteeinrichtung verhindert. So könnten beispielsweise die Tragringe der Kunststoffvorformlinge eine Ausnehmung aufweisen, in welche ein entsprechender Pin der Halteeinrichtung eingreift

Die vorliegende Erfindung ist weiterhin auf ein Verfahren zum Temperieren von Kunststoffvorformlingen gemäß Anspruch 13 gerichtet. Die Kunststoffvorformlinge werden zur Temperierung in eine Temperierform eingebracht und diese Temperierform weist wenigstens ein bewegliches Formteil auf und zum Einbringen der Kunststoffvorformlinge wird eine Relativbewegung zwischen dem Kunststoffvorformling und wenigstens einem Formteil in einer Längsrichtung des Kunststoffvorformlings vorgesehen. Wie oben erwähnt, ist es dabei möglich, dass die Temperierform bewegt wird oder auch, dass der Kunststoffvorformling selbst bewegt wird. Vorteilhaft wird die Temperierform mittels eines Temperiermediums temperiert. Bei einem weiteren vorteilhaften Verfahren wird der Vorformling anschließend umgeformt und insbesondere in einer Blasstation umgeformt.

Bei einem vorteilhaften Verfahren werden wenigstens einzelne Kunststoffvorformlinge oder Gruppen von Kunststoffvorformlingen nicht temperiert. Auf diese Weise ist es möglich, im Rahmen einer Anlage zum Behandeln von Kunststoffbehältnissen auch solche Behältnisse mit einem etwa runden Querschnitt (welche nicht in der obigen Weise (vor)temperiert werden) herzustellen.

Weitere Vorteile und Ausführungsformen ergeben sich aus den beigefügten Zeichnungen. Darin zeigen:
- Fig. 1: eine schematische Darstellung einer Anlage zum Behandeln von Behältnissen;
- Fig. 2: eine Detaildarstellung der in Fig. 1 gezeigten Anlage;
- Fig. 3: eine Darstellung einer erfindungsgemäßen Vorrichtung;
- Fig. 4: eine weitere Darstellung einer erfindungsgemäßen Vorrichtung;
- Fig. 5: eine Detaildarstellung der in Fig. 4 gezeigten Vorrichtung;
- Fig. 6a-6k: unterschiedliche Ausgestaltungen für das Einbringen des Vorformlings; und
- Fig. 7: eine Ausgestaltung einer Halteeinrichtung für die Kunststoffvorformlinge.

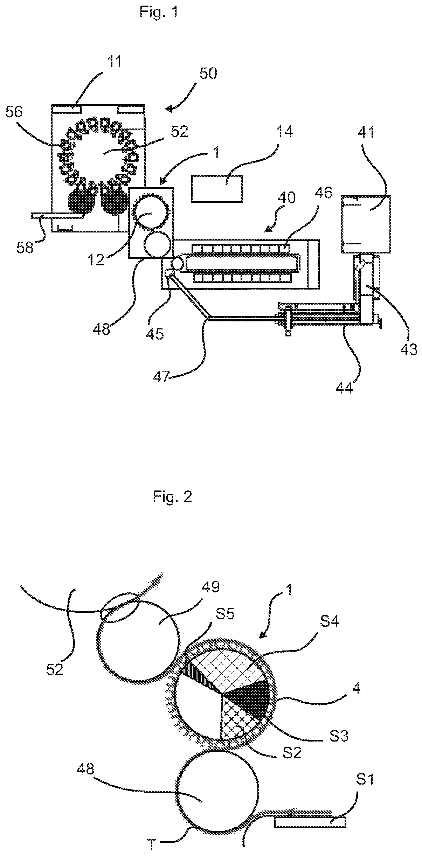

Fig. 1 zeigt eine schematische Darstellung einer Anlage zum Behandeln von Behältnissen. Dabei ist ein Reservoir 41 für Kunststoffvorformlinge 10 vorgesehen, sowie ein sich an dieses Reservoir 41 anschließender Förderer 43, wie etwa ein Steilförderer. An diesen Förderer schließt sich ein Rollensortierer 44 an und an diesem wiederum eine Transportschiene 47 zum Fördern der Kunststoffvorformlinge 10. Über ein Eintaktrad 45 werden die Kunststoffvorformlinge 10 einer in ihrer Gesamtheit mit 40 bezeichneten Heizeinrichtung zugeführt.

Diese Heizeinrichtung 40 weist dabei eine Vielzahl von Heizelementen bzw. Heizkavitäten 46 auf, in denen die Kunststoffvorformlinge 10 erwärmt werden. Dabei werden vorteilhaft in der besagten Heizeinrichtung 40 die Kunststoffvorformlinge 10 einheitlich erwärmt, d. h. evtl. abgesehen von ihrem Mündungsbereich mit einem einheitlichen Temperaturprofil beaufschlagt. An die Heizeinrichtung 40 schließt sich ein Transferrad 48 an, welches die Kunststoffvorformlinge 10 an die erfindungsgemäße Vorrichtung 1 zum Temperieren der Kunststoffvorformlinge 10 übergibt.

Diese Vorrichtung 1 weist dabei eine Vielzahl von Temperierformen 4 auf, wobei diese Temperierformen Formteile 4a, 4b bzw. Prägeplatten aufweisen, welche die Bereiche der Kunststoffvorformlinge 10 kontaktieren. Damit ist die erfindungsgemäße Vorrichtung 1 zwischen einer Blasmaschine 50 und der Heizeinrichtung 40, die hier als Infrarotofen ausgestaltet ist, angeordnet. Alternativ kann die Heizeinrichtung 40 u.a. aber auch als Mikrowellenofen bzw. STIR- oder Laserheizung vorgesehen sein. Daneben können auch mehrere insbesondere aufeinanderfolgende Heizeinrichtungen (auch unterschiedlicher Gattungen) vorgesehen sein

Das Bezugszeichen 14 bezieht sich auf ein Temperiergerät, welches die Formteile 4a, 4b bzw. Trägerplatten der einzelnen Temperierformen 4 auf die gewünschte Prozesstemperatur erwärmt. An die Vorrichtung 1 schließt sich, wie oben erwähnt, eine Blasmaschine 50 an, wobei diese Blasmaschine ein drehbares Blasrad 52 mit einer Vielzahl von daran angeordneten Blasstationen 56 aufweist, innerhalb derer die Kunststoffvorformlinge 10 durch Druckbeaufschlagung zu Kunststoffbehältnissen expandiert werden. Das Bezugszeichen 11 bezieht sich auf Steuereinrichtungen zum Steuern des Umformungsprozesses. Über einen Abförderer 58 werden die nunmehr geformten Kunststoffbehältnisse aus der Maschine abgeführt.

Fig. 2 zeigt eine Detaildarstellung der in Fig. 1 gezeigten Vorrichtung, insbesondere den Prozessablauf bei der Temperierung der Kunststoffvorformlinge 10. Auch hier werden die Kunststoffvorformlinge 10 entlang der Linie T der Vorrichtung 1 zugeführt.

Dabei werden die Kunststoffvorformlinge 10 unterschiedlichen Behandlungsabschnitten S1 bis S5 zugeführt. In dem Abschnitt S1, der sich noch in der Heizeinrichtung 40 befindet, werden die Kunststoffvorformlinge 10, wie aus dem Stand der Technik bekannt, einheitlich erwärmt. Anschließend werden sie an einem Abschnitt S2 von dem Übergaberad 48 übernommen und in einem weiteren Schritt S3 orientiert. Diese Orientierung erfolgt dabei durch eine Drehung der Kunststoffvorformlinge 10 um deren Längsachse, um eine gewünschte Gewindestellung zu erreichen.

In dem Abschnitt S4 werden die Kunststoffvorformlinge 10 selektiv temperiert, d. h. bestimmte Bereiche der Außenwandung der Kunststoffvorformlinge 10 werden temperiert. Bei dem Zuführstern 48 kann es sich auch um einen Teilungsverzugstern handeln, der eine Teilung zwischen den einzelnen Kunststoffvorformlingen 10 verändert, beispielsweise vergrößert und der anschließend die Behältnisse der Vorrichtung 1 zuführt. Das Orientieren in dem Abschnitt S3 erfolgt beispielsweise vor dem und/oder beim Eintauchen der Kunststoffvorformlinge in die jeweiligen Temperierformen. In dem Abschnitt S4 wird, wie erwähnt, mittels der Prägeplatten am Radius ein Temperaturprofil aufgeprägt. Die zeitliche Dauer dieser Behandlung ist vorteilhaft veränderbar, wobei Änderungen beispielsweise dadurch erfolgen können, dass sich die Formteile früher oder später um den Kunststoffvorformling 10 schließen.

In dem Abschnitt S5 wird eine Ausgleichzeit für die Kunststoffvorformlinge 10 ermöglicht. Weiterhin werden die Kunststoffvorformlinge 10 wiederum durch Drehung so orientiert, dass sie einer korrekten Drehstellung an das Blasrad 52 bzw. die einzelnen Blasstationen übergeben werden können. Das Bezugszeichen 49 bezeichnet einen weiteren Teilungsverzugstern, mit dessen Hilfe die Kunststoffvorformlinge 10 an das Blasrad 52 übergeben werden. In korrekter Ausrichtung zur Blasform (nicht gezeigt) werden die Kunststoffvorformlinge 10 in einem herkömmlichen Blasprozess zu Kunststoffbehältnissen geblasen. Auch die Länge dieser Ausgleichszeit ist vorteilhaft veränderbar, was beispielsweise durch eine frühere oder spätere Entnahme des Kunststoffvorformlings 10 aus der Temperierform 4 durchgeführt werden kann.

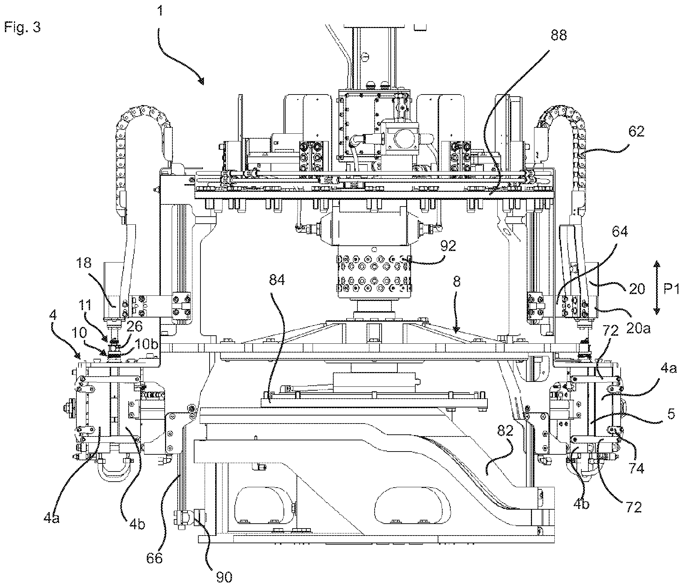

Fig. 3 zeigt eine Darstellung einer erfindungsgemäßen Vorrichtung 1. Diese Vorrichtung weist dabei ein Trägerrad 8 auf, an dem eine Vielzahl von Temperierformen 4 angeordnet ist und mit diesem Trägerrad 8 bewegt wird. Für eine Erkennung von Mundstückmarkierungen zur Orientierung der Mundstücke bzw. der Kunststoffvorformlinge ist eine Vorformlingsinspektion zwischen dem in Fig. 2 gezeigten Teilungsverzugstern 48 und der Vorrichtung 1 bzw. dem Behandlungsstern 8 angeordnet. Allgemein könnte die Vorformlingsinspektion zwischen der Heizeinrichtung 40 und der Vorrichtung vorgesehen sein. Daneben oder zusätzlich wäre es auch möglich, dass eine Orientierung der Kunststoffvorformlinge durch Drehung derselben auf einem Blasrad vorgenommen wird.

Das Bezugszeichen 20 bezieht sich auf eine Bewegungseinrichtung, welche auch dazu dient, um Kunststoffvorformlinge hinsichtlich ihrer Drehstellung zu orientieren. Diese Bewegungseinrichtung 20 ist dabei an einer Keilwelle 66 über einen Schlitten 64 beweglich angeordnet. Das Bezugszeichen 88 kennzeichnet ein Konsolenrad, an dem die besagte Keilwelle ebenfalls angeordnet ist. Über eine Führung 62 werden elektrische Zuleitungen für die Bewegungseinrichtung 20 geführt. Die einzelnen Temperierformen 4 sind damit auf dem Träger bzw. dem Behandlungsstern 8 aufgesetzt und werden von oben her mittels des erwähnten Konsolenrads 88 zusätzlich fixiert und ausgerichtet. Das Trägerrad 8 ist wiederum an einer Sternsäule 84 montiert, auf der auch eine Hubkurve 82 angeordnet ist. Durch einen Drehverteiler wird durch eine hohlgebohrte Welle 13 das Temperiermedium in einen Drehverteiler 92 geleitet. In diesem Drehverteiler sind Vor- und Rücklaufanschlüsse montiert, von denen Schläuche (nicht gezeigt) zu dem hinteren Formteil 4b bzw. dem jeweils innen liegenden Formteil 4b führen.

Die Bewegungseinrichtung 20 ist in Ihrer Gesamtheit beweglich und führt eine Auf-/ Abwärtsbewegung entlang des Doppelpfeils P1 durch. Dies wird wiederum dadurch ermöglicht, dass an der Keilwelle 66 eine Rolle 90 montiert ist, welche in der Hubkurve 82 läuft. Auf diese Weise kann der Kunststoffvorformling 10 aufgenommen werden und in die Temperierform 4 bzw. in die Prozesskammer eintauchen. Weiterhin kann durch den Einsatz der Keilwelle 66 das Drehen der Einheit verhindert werden. Daneben kann eine Rutschkupplung in den Motorenträger 64 integriert sein.

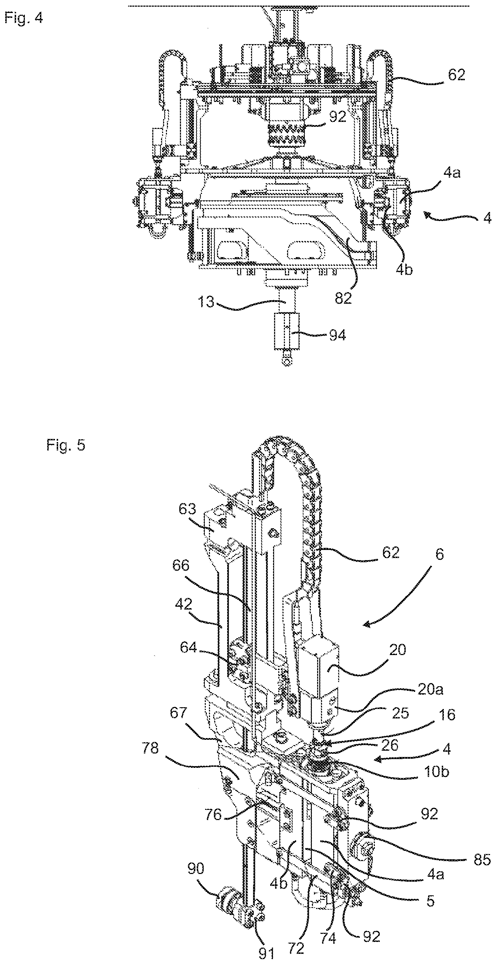

Fig. 4 zeigt eine weitere Darstellung der in Fig. 3 gezeigten Vorrichtung. Hier ist insbesondere ein weiterer Drehverteiler 94 erkennbar, der das Temperiermedium über die Hohlwelle 13 dem in Fig. 3 gezeigten Drehverteiler 92 zuführt.

Fig. 5 zeigt eine Darstellung einer einzelnen Behandlungsstation. Hier ist wiederum die Keilwelle 66 mit der ihr zugeordneten Kurvenrolle 90 dargestellt. Das Bezugszeichen 78 kennzeichnet eine untere Führung für die besagte Kurvenrolle 90 und das Bezugszeichen 91 eine untere Führung für die Keilwelle.

Das Bezugszeichen 64 kennzeichnet auch hier den Motorträger zum Halten der Bewegungseinrichtung 20 bzw. der Schrittmotoreinheit 20a. Das Bezugszeichen 42 kennzeichnet entsprechend einen oberen Halter und das Bezugszeichen 63 eine obere Führung für die Keilwelle 66. Das Bezugszeichen 67 kennzeichnet eine untere Halteeinrichtung.

Die Temperierform 4 weist dabei zwei Formteile 4a und 4b auf, die hier gegeneinander bewegbar sind. Das Bezugszeichen 76 kennzeichnet eine Antriebseinrichtung, wie einen Linearmotor, der dazu dient, um die beiden Formteile 4a und 4b aufeinander zuzubewegen. Zu diesem Zweck weist die Vorrichtung eine Schubstange 72 auf, sowie eine Druckstange 74, welche über eine Umlenkung 92, die hier gelenkig bzw. schwenkbar ausgeführt ist, miteinander verbunden sind. Durch diese Mechanik wird bei einer Bewegung des inneren Formteils 4b nach außen auch gleichzeitig das äußere Formteil 4a nach innen gezogen und damit die Kavität um den Kunststoffvorformling 10 geschlossen. Zwischen diesen beiden Formteilen 4a, 4b ist ein Aufnahmeraum 5 zum Temperieren der Kunststoffvorformlinge 10 ausgebildet.

Das Bezugszeichen 25 kennzeichnet eine Dornaufnahme und das Bezugszeichen 26 einen Greifer für den Kunststoffvorformling, der in ein Mündstück 10b des Kunststoffvorformlings eingreift. Das Bezugszeichen 6 bezeichnet eine Zuführungseinheit welche der Temperiereinheit 4 die Kunststoffvorformlinge 10 zuführt. Dabei werden die Kunststoffvorformlinge hier in ihrer Längsrichtung zugeführt. Das Bezugszeichen 16 kennzeichnet eine Halteeinrichtung zum Halten der Kunststoffvorformlinge.

Die Prozesskammer, die durch die beiden Formteile 4a und 4b gebildet wird, ist temperiert und mit einem Temperaturfühler zur Regelung der Solltemperatur ausgestattet. In dieser Prozesskammer sind die beiden Formteile 4a und 4b angeordnet, die mit einer speziellen Innenkontur, welche flaschen- bzw. kunststoffvorformlingabhängig ist, ausgeführt sind. Die Formteile 4a, 4b sind für die jeweilige Flaschenkontur und Kunststoffvorformlingsgeometrie ausgelegt und können bei einem Sortenwechsel getauscht werden.
Die Prägeplatten bzw. Formteile 4a, 4b können bevorzugt aus zwei verschiedenen Materialien bestehen; die erste beispielsweise aus einem wärmeisolierenden (z.B. Teflon) und die zweite aus einem wärmeleitenden Material (Aluminium). Besonders bevorzugt können auf der Prägeplatte Stege in Längs- und/oder Umfangsrichtung angebracht sein, um gezielt bestimmte Stellen des Preforms zu temperieren.

Auch wäre es möglich, dass eine Prägeplatte Bereiche aufweist, welche aus einem wärmeleitenden Material bestehen, um Wärme aus einem Wandungsteil des Vorformlings 2 abzuführen sowie auch Bereiche, welche aus einem wärmeisolierenden Material bestehen, um einem Wandungsteil des Vorformlings 2 Wärme zuzuführen.

Der Kunststoffvorformling 10 wird bei der Übergabe von dem Teilungsverzugstern 48 mit der Greifeinrichtung 26 aufgenommen.

Durch die Nutkurve 82 werden die Höhenpositionen der Greifereinrichtung 26 abgefahren. In dem gezeigten Beispiel betragen die Höhenpositionen der oberen Stellung +23 mm, wie auch bei der vorgelagerten Heizeinrichtung (zum Erwärmen der Kunststoffvorformlinge 10, nicht gezeigt). Bei der Übergabe taucht der Greifer 26 in das Mundstück 10b des Kunststoffvorformlings 10 ein. Ist diese Endlage erreicht, befindet sich die Bewegungseinrichtung 20 bei der Höhenposition von 0 mm. Die Klammer des Übergabesterns 48 kann sich öffnen und wegfahren.

Der Kunststoffvorformling 10 wird mit der Bewegungseinrichtung 20 in die gewünschte Position gedreht, damit das Mundstück 10b orientiert zum Flaschenkörper des Kunststoffvorformlings 10 ausgerichtet ist. Dies ist vorteilhaft, wenn beispielsweise der Verschluss eine bestimmte Stellung zum Flaschenkörper benötigt. Die Orientierung erfolgt dabei während des Eintauchens in die Prozesskammer. Es wäre jedoch auch möglich, dass diese Orientierung bereits vor dem Eintauchen oder auch nach dem Eintauchen vorgenommen wird.

Eine Orientierungsmarke des Kunststoffvorformlings 10 wird mit Hilfe eines Sensors, insbesondere Softsensors erkannt und die Position an die Steuerung des Schrittmotors 20a übermittelt. Alternativ könnten auch Lasertaster, Lichttaster, mechanische Schalter oder eine mechanische Einrastung für die Erkennung benutzt werden.

Nachdem die Endlage erreicht ist (beispielsweise bei einer Position von -155 mm), kann der Kunststoffvorformling 10 behandelt bzw. temperiert werden. Die Orientierung und die Hubbewegungen können auch durch einen Linear-/Rotationsantrieb erfolgen, der die Hub- und die Drehbewegung ausführt. Auf diese Weise wäre es möglich, dass die Hubkurve 82 komplett entfällt.

Mittels des Antriebs 76 oder Schrittmotors wird, wie erwähnt, der hintere Formträger 4b nach vorne geschoben und über die Schubstange 72 wird die Kraft in der Umlenkung auf die Druckstange 74 umgelenkt, damit das vordere Formteil 4a betätigt wird und sich die Prozesskammer in Richtung des Zentrums, d. h. aber auch der Symmetrieachse des Kunststoffvorformlings 10, schließt. Dabei berühren die beiden Formteile 4a, 4b bzw. deren Innenwandungen den Kunststoffvorformling 10 und dieser wird auf diese Weise temperiert.

Der Hub beim Schließen der Formteile 4a, 4b kann hier durch einen mechanischen Anschlag 85 begrenzt werden. Bei der Variante mit einem Schrittmotor ist ein Anschlag nicht erforderlich, da die Schließposition durch die Anzahl der Schritte eingestellt werden kann (diese Variante hat den Vorteil besonderer Flexibilität). Der Startpunkt und Endpunkt des Öffnens und Schließens ist dabei variabel ausgestaltet und kann beispielsweise über eine Steuerung eingestellt werden.

Nach der Behandlung des Kunststoffvorformlings 10 werden die Formteile 4a, 4b wieder auseinandergefahren, wobei dies durch einen entsprechenden Rückhub der Bewegungseinrichtung 76 bzw. durch den Schrittmotor erfolgt. Der Kunststoffvorformling 10 hat nunmehr keinen Kontakt mehr mit den beiden Formteilen 4a, 4b.

Nachdem die Behandlung abgeschlossen ist, beginnt für den Kunststoffvorformling 10 die Ausgleichzeit. Während dieser Zeit kann der Kunststoffvorformling10 bezüglich der Blasform ausgerichtet werden, wobei dies vorteilhaft spätestens dann erfolgt, wenn sich die Schrittmotoreneinheit 20a wieder nach oben bewegt. In der Übergabeposition (der Position 0 mm) ist die Orientierung vorteilhaft spätestens abgeschlossen.

Bei der Übergabe an das Blasrad 52 fährt die Klammer des Teilungsverzugsterns 49 wiederum in eine Mundstücksnut des Kunststoffvorformlings 10 und schließt sich. Anschließend wird die Schrittmotoreneinheit 20 nach oben gefahren. Schließlich wird der Kunststoffvorformling 10 in der Blasmaschine 50 geblasen. Die ersten Formteile 4a liegen vorteilhaft vollständig radial außerhalb der Formteile 4b.

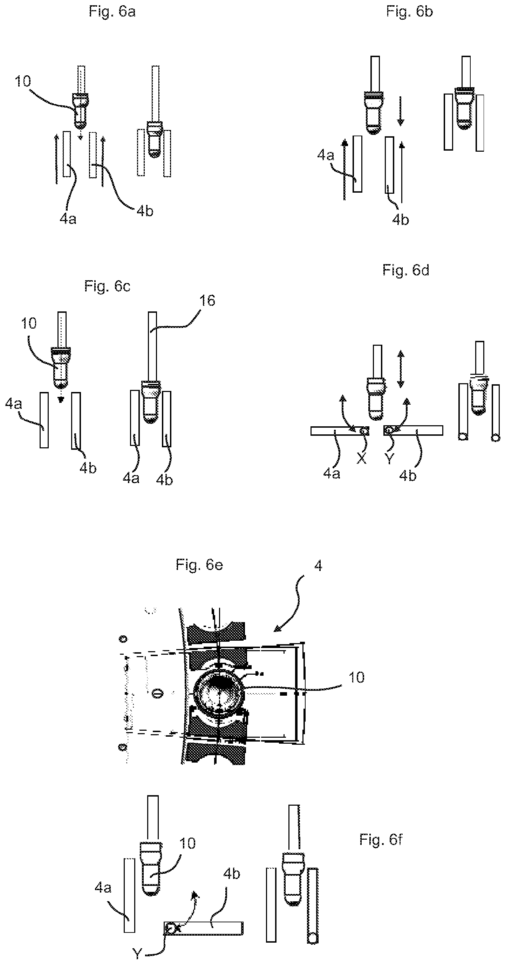

Die Fig. 6a bis 6k zeigen grob schematisch weitere Konzepte eines Einbringens des Kunststoffvorformlings 10 in die Temperierform 4. Bei der in 6a gezeigten Variante fahren der Kunststoffvorformling 10 und auch die Prozesskammer bzw. die Formteile 4a und 4b aufeinander zu.

Bei der in Fig. 6b gezeigten Variante wird der Kunststoffvorformling 10 nicht in seiner Längsrichtung L bewegt, sondern lediglich die beiden Formteile 4a und 4b werden bewegt. Die in Fig. 6c gezeigte Variante stellt die bereits oben beschrieben Variante dar, bei der der Kunststoffvorformling 10 in die Prozesskammer bzw. zwischen die Formteile 4a und 4b einfährt.

Bei der in Fig. 6d gezeigten scherenartigen Darstellung wird der Kunststoffvorformling 10 selbst nicht in seiner Längsrichtung L bewegt, sondern die beiden Formteile 4a und 4b werden (scherenartig) um jeweilige Achsen X, Y geschwenkt. Auf diese Weise werden jedoch Bereiche dieser Formteile 4a und 4b auch in der Längsrichtung L bewegt bzw. weisen eine Komponente in der Längsrichtung L auf.

Bei dem in Fig. 6e gezeigten Konzept handelt es sich bei der Temperierform um einen Miniformträger, der den Kunststoffvorformling 10 ebenfalls klammert. Bei dieser Ausführungsform ist eine Bewegung des Kunststoffvorformlings 10 in seiner Längsrichtung nicht unbedingt erforderlich. Es wäre denkbar, den Kunststoffvorformling 10 senkrecht zu seiner Längsrichtung zuzuführen.

Bei dieser in Fig. 6e gezeigten Ausführungsform wäre es denkbar, dass die beiden Formteile 4a, 4b um eine gemeinsame Achse schwenkbar sind, um so die Temperierform 4 zu öffnen bzw. zu schließen. Vorteilhaft wird bei dieser Ausführungsform der Kunststoffvorformling 10 entlang seiner gesamten unterhalb des Gewindes liegenden Länge von den Formteilen 4a, 4b bzw. deren Innenwandung kontaktiert. Daneben wäre es bei dieser Ausgestaltung auch möglich, dass sich die beiden Formteile 4a und 4b bzw. wenigstens eines dieser beiden Formteile geradlinig bewegt, um die Temperierform 4 zu öffnen und zu schließen. Im Gegensatz zu Blasformen sind bei der hier gezeigten Temperierformen 4 nur relativ geringe Bewegungen der jeweiligen Formteile 4a, 4b nötig, da kein geblasenes Behältnis sondern lediglich ein Kunststoffvorformling 10 entnommen werden muss. Daneben ist es bei dieser Ausführungsform und auch den übrigen Ausführungsformen möglich, dass die beiden Formteile 4a, 4b spiegelbildlich zueinander ausgebildet sind.

Bei der in Fig. 6f gezeigten Ausführungsform wird nur eines der beiden Formteile, nämlich das Formteil 4b, um seine Achse y geschwenkt und der Kunststoffvorformling 10 selbst nicht in seiner Längsrichtung bewegt. Bei dieser Ausführungsform bewegt sich damit das Formteil 4b zumindest auch in der Längsrichtung L bzw. weist eine Bewegungskomponente in dieser Richtung auf.

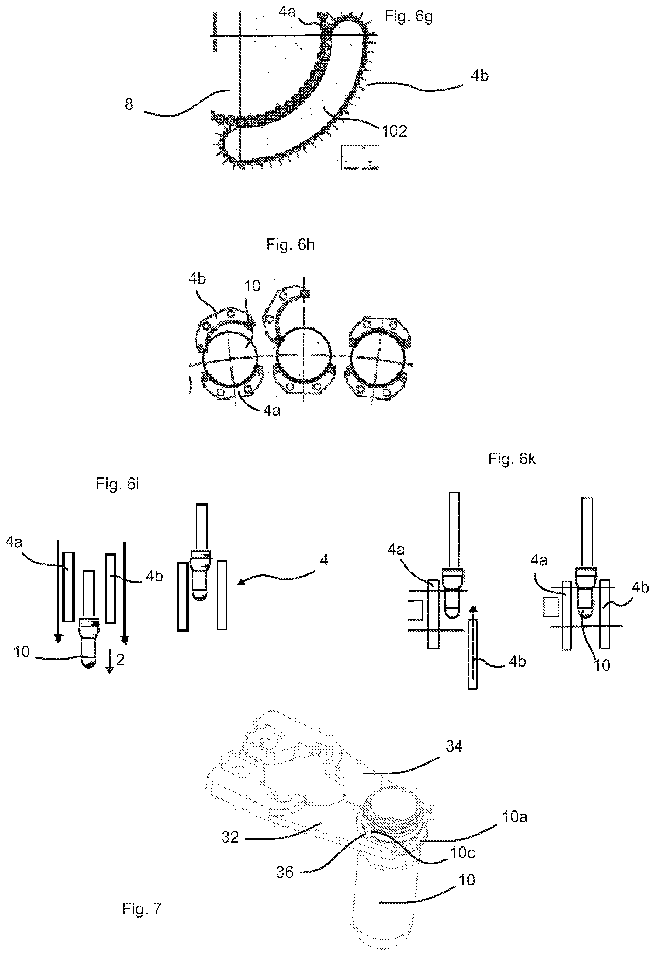

Bei der in Fig. 6g gezeigten Variante werden die ersten Formteile 4a auf einem Trägerrad 8 geführt und die zweiten Formteile 4b laufen auf einem über den Behandlungsraum angedockten Nierentisch 102. Die zweiten Formteile 4b werden damit an einer Kette bzw. einem Zahnriemen mitgeführt, wobei die Kette zur Synchronisation auch über das Trägerrad 8 angetrieben werden kann. Bei dieser Ausgestaltung ist eine Bewegung des Kunststoffvorformlings 10 oder der Formteile 4a, 4b in deren Längsrichtung L nicht unbedingt erforderlich. Auch muss bei dieser Ausführungsform nicht stets ein bestimmtes erstes Formteil 4a genau einem zweiten Formteil 4b zugeordnet sein.

Allgemein werden bei dieser Ausführungsform die ersten Formteile 4a mit einer ersten Transporteinrichtung transportiert und die zweiten Formteile 4b mittels einer zweiten Transporteinrichtung, wobei diese beiden Transporteinrichtungen insbesondere getrennt voneinander sind. Vorteilhaft werden die auf den beiden unterschiedlichen Transporteinrichtungen angeordneten Formteile 4a, 4b in einem vorgegebenen Bereich zusammengeführt, wobei in diesem Bereich auch ein Kunststoffvorformling 10 zwischen den beiden Formteilen 4a, 4b angeordnet ist. Daher weichen vorteilhaft die Transportpfade der ersten Formteile 4a von den Transportpfaden der zweiten Formteile 4b wenigstens abschnittsweise ab.

Vorteilhaft ist ein Transportpfad, auf dem die ersten Formteile 4a transportiert werden in einem bestimmten Bereich parallel zu einem Transportpfad, auf dem die zweiten Formteile 4b transportiert werden. Vorteilhaft sind wenigstens abschnittsweise die Innenflächen der ersten Formteile 4a den Innenflächen der zweiten Formteile 4b abgewandt. Bei einer weiteren vorteilhaften Ausführungsform ist die Transportgeschwindigkeit der ersten Formteile 4a gleich der Transportgeschwindigkeit der zweiten Formteile 4b.

Bei der in Fig. 6h gezeigten Ausführungsform ist ein ausschwenkbarer Halter vorgesehen, wobei bei der Eingabe der Kunststoffvorformlinge 10 dieser Halter ausgeschwenkt wird, sodass die Kunststoffvorformlinge 10 durch die Lücke eingegeben werden kann. Nachdem die beiden Formteile 4a, 4b verschlossen sind, kann von der stehenden Platte bzw. dem "stehenden" Formteil 4a ein Stift oder etwas Ähnliches in den beweglichen Halter bzw. das bewegliche Formteil 4b gefahren werden, der zum einem zentriert und zum anderen einen parallelen Schließmechanismus aktiviert.

Bei dieser in Fig. 6h gezeigten Ausführungsform ist es möglich, dass die jeweils ersten Formteile 4a fest gegenüber einem Träger, wie beispielsweise einem Transportrad angeordnet sind und die zweiten Formteile 4b beweglich gegenüber diesem Transportrad, wobei hierzu die zweiten Formteile 4b besonders vorteilhaft bezüglich einer Schwenkachse schwenkbar sind, welche senkrecht zu einer Transportrichtung der Kunststoffvorformlinge 10 steht und welche besonders bevorzugt parallel zu einer Längsrichtung L der Kunststoffvorformlinge 10 ist.

Bei der in Fig. 6i gezeigten Ausführungsform kommen die Formteile 4a, 4b von oben, d. h. werden in Längsrichtung L des Kunststoffvorformlings 10 nach unten bewegt. Wenn die Klammer des Kunststoffvorformlings 10 außerhalb der Kollisionszone ist, kann die Einheit 4 weiter nach unten fahren, wie in dem rechten Teilbild von Fig. 6i gezeigt.

Bei der in Fig. 6k gezeigten Situation ist es möglich, dass ein Formteil bzw. eine Seite 4b nach unten wegfährt. In dem oberen Zustand fährt ein Kolben in die bewegliche Seite und zentriert diese, wobei durch diesen Hub auch der Mechanismus auf beiden Formteilen 4a, 4b ausgelöst werden kann, damit diese parallel zusammenfahren können.

Zur Bewegung der Formteile 4a, 4b sind mehrere Antriebsvarianten denkbar. So könnte ein Tauchspulenantrieb verwendet oder auch eine verstellbare Kurve, wobei beispielsweise die Formträger offen sind und mittels einem verstellbaren Anschlag geöffnet und verschlossen werden. Auch wäre ein zweiteiliger Verschließmechanismus denkbar.

Allgemein sind für den hier beschriebenen Prozess des Temperierens der Kunststoffvorformlinge 10 die Temperierung der Prägeplatten bzw. Formteile 4a, 4b, die Temperatur des Kunststoffvorformlings 10 nach dem Heizmodul, der Zeitpunkt und die Dauer der Behandlung bzw. Temperierung, der Zeitpunkt und die Dauer der Ausgleichszeit, die zu behandelnde Oberfläche an dem Kunststoffvorformling 10 (Fläche & Geometrie) sowie Häufigkeit der Behandlung relevant.

Die Temperatur der Formteile 4a, 4b bzw. Prägeplatten ist abhängig von der Flaschenform, Preformwandstärke und der Behandlungszeit und liegt vorteilhaft zwischen 35°C und 110°C, vorteilhaft zwischen 35° und 85°.

Die Temperatur der Formatteile 4a, 4b bzw. Prägeplatten kann auch in Abhängigkeit von der Geometrie der Kunststoffvorformlinge 10 oder der herzustellenden Behältnisse gewählt werden (Wandstärken, Längen- Breitenverhältnis). Daneben können auch die Behandlungszeit und die zur Verfügung stehende Ausgleichszeit die Temperatur der Formatteile mitbestimmen.

Die Temperatur der Kunststoffvorformlinge 10 ist vom verwendeten Resin und von der anschließenden Behandlung abhängig und liegt üblicherweise zwischen 95°C und 120°C.

Bei einer bevorzugten Ausführungsform ist mindestens ein Sensor zur Ermittlung der Temperatur vorhanden. Dieser Sensor befindet sich bevorzugt in dem Bereich vom Beginn der Heizeinrichtung 40 bis zum Ende des Blasrads 52, besonders bevorzugt am Ende der Heizeinrichtung 40, an den jeweiligen Prägeplatten des Behandlungssterns 8 oder an den Blasformen des Blasrads 52, um den Temperatur-Ist-Wert des Kunststoffvorformlings 10 bzw. des Behältnisses zu ermitteln.

Besonders bevorzugt ist dieser Sensor mit der Temperatursteuerung der Heizeinrichtung 40 bzw. der Prägeplatten verbunden, um die ermittelten Ist-Werte mit Sollwerten zu vergleichen und anschließend die Temperatur zu regeln. Weiterhin ist bevorzugt ein Wanddickenmessgerät auf dem Blasrad 52 vorhanden, das die Wanddicken der hergestellten Behältnisse misst, um auf Grund dieser Messergebnisse die Temperaturprofilierung der Kunststoffvorformlinge 10 regeln zu können.

Bei einer Stationsleistung von 2000 Behältern pro Kavität in der Blasmaschine 50 liegt die Behandlungszeit bzw. Temperierzeit vorteilhaft zwischen 50 und 1500 ms. Eine Gesamtbehandlungszeit inkl. der Ausgleichzeit liegt vorteilhaft in einem Bereich von ca. 3 bis 3,5s Sekunden. Der Zeitpunkt der Behandlung ist im Zwischenmodul variabel gestaltet. Startzeitpunkt und Endzeitpunkt sind variabel. Genauer gesagt, können die zeitlichen Dauern der einzelnen in Fig. 2 gezeigten Zeitabschnitte bzw. die jeweiligen Umfangswinkel geändert werden.

Die oben erwähnte Ausgleichzeit gliedert sich vorteilhaft drei Abschnitte:
Ein Abschnitt 1 beginnt nach dem letzten eingeschalteten Heizkasten bis zur Behandlung bzw. Temperierung. Dieser Abschnitt 1 ist daher variabel. Die Variabilität wird einerseits mit den eingeschalteten Heizkästen und andererseits mit dem Start der Behandlung erreicht.

Ein weiterer Abschnitt 2 liegt nach der Behandlung bzw. Temperierung, dieser ist auch variabel. Ein dritter Abschnitt 3 entspricht dem Transport durch den Teilungsverzugstern, hierdurch wird eine feste Ausgleichszeit bewirkt. Die Ausgleichszeit ist jedoch auch abhängig von der Maschinenleistung.

Der Kunststoffvorformling 10 kann auch mehrmals im Behandlungsstern behandelt werden, dies kann beispielsweise vonnöten sein, wenn bestimmte Temperaturprofile mehrmals auf den Preform aufgeprägt werden sollen.

Nach der ersten Behandlung wird der Preform mittels Schrittmotor in die gewünschte Stellung (Winkel) gedreht und ein weiters Mal mit den Behandlungsplatten touchiert.

Besonders vorteilhaft ist die Verwendung von unterschiedlichen Temperaturprofilen, wenn mit einer Blasmaschine der Reihe nach verschiedene Flaschen geblasen werden, die sich beispielsweise in Größe, Form, Material oder Farbe unterscheiden.

Fig. 7 zeigt eine Ausgestaltung einer Halteeinrichtung 16 zum Halten der Kunststoffvorformlinge 10 wobei bei dieser Ausgestaltung die Halteeinrichtung eine Verdrehsicherung aufweist, welche ein Verdrehen des Kunststoffvorformlings 10 bezüglich seiner Längsrichtung L gegenüber der Halteeinrichtung 16 verhindert. Diese Halteeinrichtung weist dabei ein erstes Klammerteil 32, sowie ein zweites Klammerteil 34 auf. Diese Klammerteile sind dabei bevorzugt bezüglich einander beweglich angeordnet, um den Kunststoffvorformling zu greifen. Das Bezugszeichen 36 bezieht sich auf einen Vorsprung bzw. Pin, der in eine Ausnehmung 10c, die in dem Tragring 10a des Kunststoffvorformlings eingreift, vorgesehen ist. Auf diese Weise kann sich der Kunststoffvorformling nicht gegenüber der Halteeinrichtung 16 drehen.

### Bezugszeichenliste

- 1: Vorrichtung
- 4: Temperierform
- 4a: außen liegendes Formteil
- 4b: hinteres Formteil, innen liegendes Formteil
- 5: Aufnahmeraum (zwischen Formteilen)
- 6: Zuführungseinheit
- 8: Trägerrad, Behandlungsstern
- 10: Kunststoffvorformling
- 10a: Tragring des Kunststoffvorformlinges
- 10b: Mundstück
- 10c: Ausnehmung in dem Tragring 10a
- 11: Steuereinrichtungen
- 12: Transporteinheit
- 13: hohlgebohrte Welle
- 14: Temperiergerät
- 16: Halteeinrichtung
- 18: Dreheinrichtung
- 20: Bewegungseinrichtung
- 20a: Schrittmotoreneinheit
- 25: Dornaufnahme
- 26: Greifer
- 32: erstes Klammerteil
- 34: zweites Klammerteil
- 36: Pin
- 40: Heizeinrichtung
- 41: Reservoir
- 42: oberer Halter
- 43: Förderer
- 44: Rollensortierer
- 45: Eintaktrad
- 47: Transportschiene
- 46: Heizelemente, Heizkavitäten
- 48: Transferrad, Übergaberad, Zuführstern
- 49: Teilungsverzugstern
- 50: Blasmaschine
- 52: Blasrad
- 56: Blasstation
- 58: Abförderer
- 62: Führung
- 63: obere Führung
- 64: Schlitten, Motorenträger
- 66: Keilwelle
- 67: untere Halteeinrichtung
- 72: Schubstange
- 74: Druckstange
- 76: Antriebseinrichtung, Bewegungseinrichtung
- 78: untere Führung für die Kurvenrolle
- 82: Hubkurve, Nutkurve
- 84: Sternsäule
- 85: Anschlag
- 88: Konsolenrad
- 90: Kurvenrolle
- 91: untere Führung für die Keilwelle
- 92: Umlenkung
- 92, 94: Drehverteiler
- 102: Nierentisch
- T: Linie
- L: Längsrichtung
- S1-S5: Behandlungsabschnitte
- P1: Doppelpfeil
- X, Y: Achsen

## Patentansprüche

1. Vorrichtung (1) zum Temperieren von Kunststoffvorformlingen (10) mit einer Temperierform (4) zum Temperieren einer Außenwand (10a) der Kunststoffvorformlinge (10), wobei die Temperierform (4) wenigstens ein erstes Formteil (4a) aufweist, welches beweglich ist und wobei das erste Formteil (4a) zeitweise einen ersten Wandabschnitt des Kunststoffvorformlings (10) kontaktieren kann um diesen Wandabschnitt zu temperieren, wobei die Vorrichtung eine Zuführungseinheit (6) aufweist, um der Temperierform (4) die Kunststoffvorformlinge (10) zuzuführen und diese Zuführungseinheit (6) eine Halteeinrichtung (16) zum Halten der Kunststoffvorformlinge (10) aufweist sowie eine Bewegungseinrichtung (20), welche zum Zuführen der Kunststoffvorformlinge (10) in die Temperierform (4) eine Relativbewegung zwischen dem Kunststoffvorformling (10) und wenigstens einem Abschnitt wenigstens eines Formteils (4a) in einer Längsrichtung (L) des Kunststoffvorformlings (10) erzeugen kann, **dadurch gekennzeichnet, dass** die Vorrichtung (1) zum Temperieren der Kunststoffvorformlinge (10) zwischen einer Blasmaschine (50) und einer Heizeinrichtung (40) angeordnet ist und die zuvor erwärmten Kunststoffvorformlinge (10) in bestimmen Bereichen gegenüber der Erwärmungstemperatur abgekühlt oder zusätzlich erwärmt werden können und die Vorrichtung geeignet ist, ovale Behältnisse herzustellen.

2. Vorrichtung (1) nach Anspruch 1,
**dadurch gekennzeichnet, dass**
die Temperierform (4) wenigstens einen Kanal zum Führen eines fließfähigen Temperiermediums aufweist.

3. Vorrichtung nach wenigstens einem der vorangegangenen Ansprüche,
**dadurch gekennzeichnet, dass**
die Bewegungseinrichtung (20) entweder den Kunststoffvorformling (10) oder wenigstens ein Formteil (4a, 4b) bewegen kann, um den Kunststoffvorformling der Temperierform (4) zuzuführen.

4. Vorrichtung nach wenigstens einem der vorangegangenen Ansprüche,
**dadurch gekennzeichnet, dass**
Formteile (4a, 4b) den Kunststoffvorformlinge (10) in einem Temperierzustand mit einem Umfangswinkel umgeben können, der insgesamt zwischen 10° und 300° und bevorzugt zwischen 10° und 240° liegt.

5. Vorrichtung nach wenigstens einem der vorangegangenen Ansprüche,
**dadurch gekennzeichnet, dass**
die Vorrichtung (1) eine Dreheinrichtung (18) aufweist, welche den Kunststoffvorformling (10) um seine Längsachse drehen kann.

6. Vorrichtung nach wenigstens einem der vorangegangenen Ansprüche,
**dadurch gekennzeichnet, dass**
die Halteeinrichtung (16) einen in eine Mündung der Kunststoffvorformlinge (10) einbringbaren Dorn (26) aufweist.

7. Vorrichtung nach Anspruch 1,
**dadurch gekennzeichnet, dass**
das erste Formteil (4a) und ein zweites Formteil (4b) bezüglich einander in einer geraden Richtung beweglich sind.

8. Vorrichtung nach Anspruch 1,
**dadurch gekennzeichnet, dass**
wenigstens ein Formteil (4a, 4b) um eine vorgegebene Schwenkachse schwenkbar ist.

9. Vorrichtung nach Anspruch 1,
**dadurch gekennzeichnet, dass**
die Bewegungseinrichtung (20) den Kunststoffvorformling (10) in seiner Längsrichtung bewegen kann.

10. Vorrichtung nach wenigstens einem der vorangegangenen Ansprüche,
**dadurch gekennzeichnet, dass**
die Vorrichtung eine Transporteinrichtung (12) zum Transportieren der Kunststoffvorformlinge (10) entlang eines vorgegebenen Transportpfades aufweist.

11. Vorrichtung nach wenigstens einem der vorangegangenen Ansprüche,
**dadurch gekennzeichnet, dass**
die Temperierung der Kunststoffvorformlinge zuschaltbar und/oder abschaltbar ist.

12. Anlage zum Umformen von Kunststoffvorformlingen (10) zu ovalen Kunststoffbehältnissen mit einer Erwärmungseinrichtung (40), welche die Kunststoffvorformlinge (10) erwärmen kann und einer in einer Transportrichtung der Kunststoffvorformlinge (10) nach dieser Erwärmungseinrichtung (40) angeordneten Umformungseinrichtung (50) zum Umformen von Kunststoffvorformlingen (10) zu Kunststoffbehältnissen,
**dadurch gekennzeichnet, dass**
in der Transporteinrichtung der Kunststoffbehältnisse (10) zwischen der Erwärmungseinrichtung (40) und der Umformungseinrichtung (50) wenigstens eine Vorrichtung zum Temperieren von Kunststoffvorformlingen (10) nach wenigstens einem der vorangegangenen Ansprüche angeordnet ist.

13. Verfahren zum Temperieren von Kunststoffvorformlingen (10) zur Herstellung von ovalen Behältnissen, wobei die Kunststoffvorformlinge (10) mittels einer Erwärmungseinrichtung (40) erwärmt werden und anschließend vorgegebene Bereiche der Außenwandung der Kunststoffvorformlinge (10) mittels einer Vorrichtung (1) zum Temperieren der Kunststoffvorformlinge (10) derart temperiert werden, dass sich in einer Umfangsrichtung und/oder Längsrichtung der Kunststoffvorformlinge (10) änderndes Temperaturprofil ergibt, wobei die Kunststoffvorformlinge (10) zur Temperierung in eine Temperierform (4) eingebracht werden und diese Temperierform (4) wenigstens ein bewegliches Formteil (4a) aufweist und zum Einbringen der Kunststoffvorformlinge eine Relativbewegung zwischen dem Kunststoffvorformling und wenigstens einem Formteil (4a) in einer Längsrichtung des Kunststoffvorformlings (10) vorgesehen ist und wobei die Vorrichtung (1) zum Temperieren der Kunststoffvorformlinge (10) zwischen einer Blasmaschine (50) und einer Heizeinrichtung (40) angeordnet ist und die zuvor erwärmten Kunststoffvorformlinge (10) in bestimmen Bereichen gegenüber der Erwärmungstemperatur abgekühlt oder zusätzlich erwärmt werden.

14. Verfahren nach Anspruch 13,
**dadurch gekennzeichnet, dass**
wenigstens einzelne Kunststoffvorformlinge (10) oder Gruppen von Kunststoffvorformlingen nicht temperiert werden.

## Claims

1. An apparatus (1) for tempering plastics material preforms (10) with a tempering mould (4) for tempering an outer wall (10a) of the plastics material preforms (10), wherein the tempering mould (4) has at least one first mould part (4a) which is movable and wherein the first mould part (4a) can contact a first wall portion of the plastics material preform (10) at least for a time, in order to temper this wall portion,
wherein the apparatus has a supply unit (6) in order to supply the plastics material preforms (10) to the tempering mould (4), and this supply unit (6) has a holding device (16) for holding the plastics material preforms (10) as well as a movement device (20) which, in order to supply the plastics material preforms (10) into the tempering mould (4), produces a relative movement between the plastics material preform (10) and at least one portion of at least one mould part (4a) in a longitudinal direction (L) of the plastics material pre-form (10),
**characterized in that**
the apparatus (1) for tempering the plastic preforms (10) is arranged between a blow moulding machine (50) and a heating device (40) and the preheated plastic preforms (10) can be cooled or additionally heated in certain areas with respect to the heating temperature and the apparatus is capable of producing oval containers.

2. An apparatus (1) according to claim 1,
**characterized in that**
the tempering mould (4) has at least one duct for conveying a flowable tempering medium.

3. An apparatus according to at least one of the preceding claims,
**characterized in that**
the movement device (20) can move either the plastics material pre-form (10) or at least one mould part (4a, 4b), in order to supply the plastics material preform (10) to the tempering mould (4).

4. An apparatus according to at least one of the preceding claims,
**characterized in that**
mould parts (4a, 4b) can surround the plastics material preform (10) in a tempering state at a peripheral angle which is between 10° and 300°, and preferably between 10° and 240°, as a whole.

5. An apparatus according to at least one of the preceding claims,
**characterized in that**
the apparatus (1) has a rotation device (18) which can rotate the plastics material preform (10) about its longitudinal axis.

6. An apparatus according to at least one of the preceding claims,
**characterized in that**
the holding device (16) has a mandrel (26) which is capable of being introduced into an opening of the plastics material preforms (10).

7. An apparatus according to claim 1,
**characterized in that**
the first mould part (4a) and a second mould part (4b) are movable in a straight direction with respect to each other.

8. An apparatus according to claim 1,
**characterized in that**
at least one mould part (4a, 4b) is pivotable about a preset pivot axis.

9. An apparatus according to claim 1,
**characterized in that**
the movement device (20) can move the plastics material preform (10) in its longitudinal direction.

10. An apparatus according to at least one of the preceding claims,
**characterized in that**
the apparatus has a conveying device (12) for conveying the plastics material preforms along a preset conveying path.

11. An apparatus according to at least one of the preceding claims,
**characterized in that**
the tempering of the plastics material preforms is capable of being switched on and/or switched off.

12. A plant for shaping plastics material preforms (10) to form plastics material containers, with a heating device (40) which can heat the plastics material preforms (10) and a shaping device (50), arranged downstream of this heating device (40) in a conveying direction of the plastics material preforms (10), in order to shape plastics material preforms (10) to form plastics material containers,
**characterized in that**
at least one apparatus for tempering plastics material preforms (10) according to at least one of the preceding claims is arranged in the conveying direction of the plastics material containers (10) between the heating device (40) and the shaping device (50).

13. A method of tempering plastics material preforms (10) for the production of oval containers, wherein the plastics material preforms (10) are heated by means of a heating device (40) and preset areas of the outer wall of the plastics material preforms (10) are then tempered by means of an apparatus (1) for tempering the plastics material preforms (10) in such a way that a temperature profile which changes in a peripheral direction and/ or longitudinal direction of the plastics material preforms (10) is formed on the outer wall of the plastics material preforms (10), wherein the plastics material preforms (10) for tempering are introduced into a tempering mould (4), and this tempering mould (4) has at least one movable mould part (4a), and in order to introduce the plastics material preforms a relative movement between the plastics material preform and at least one mould part (4a) is provided in a longitudinal direction of the plastics material preform (10) and wherein the apparatus (1) for tempering the plastic material preforms (10) is arranged between a blow moulding machine and a heating device (40) and the preheated plastic material preforms are cooled or additionally heated in certain areas with respect to the heating temperature.

14. A method according to claim 13,
**characterized in that**
at least individual plastics material preforms (10) or groups of plastics material preforms are not tempered.

## Revendications

1. Dispositif (1) de thermorégulation d'ébauches en matière plastique (10) comprenant un moule de thermorégulation (4) destiné à thermo-réguler une paroi extérieure (10a) des ébauches en matière plastique (10), dans lequel le moule de thermorégulation (4) comprend au moins une première partie de moule (4a), laquelle est mobile, et dans lequel la première partie de moule (4a) peut être en contact par intermittence avec une première section de paroi de l'ébauche en matière plastique (10), afin de thermo-réguler cette section de paroi,
dans lequel le dispositif comprend une unité d'alimentation (6), afin d'amener les ébauches en matière plastique (10) au moule de thermorégulation (4) et cette unité d'alimentation (6) comprend un système de retenue (16) destiné à retenir les ébauches en matière plastique (10), ainsi qu'un système de déplacement (20), lequel, pour amener les ébauches en matière plastique (10) dans le moule de thermorégulation (4), peut générer un mouvement relatif entre l'ébauche en matière plastique (10) et au moins une section d'au moins une partie de moule (4a) dans une direction longitudinale (L) de l'ébauche en matière plastique (10),
**caractérisé en ce que**
le dispositif (1) de thermorégulation des ébauches en matière plastique (10) est agencé entre une machine de soufflage (50) et un système de chauffage (40) et les ébauches en matière plastique (10) préalablement chauffées peuvent être refroidies ou chauffées de manière supplémentaire dans des zones définies par rapport à la température de chauffage et le dispositif est adapté à produire des récipients ovales.

2. Dispositif (1) selon la revendication 1,
**caractérisé en ce que**
le moule de thermorégulation (4) comprend au moins un canal destiné à guider un milieu de thermorégulation coulant.

3. Dispositif selon au moins l'une des revendications précédentes,
**caractérisé en ce que**
le système de déplacement (20) peut déplacer soit l'ébauche en matière plastique (10) soit au moins une partie de moule (4a, 4b), afin d'amener l'ébauche en matière plastique au moule de thermorégulation (4).

4. Dispositif selon au moins l'une des revendications précédentes,
**caractérisé en ce que**
les parties de moule (4a, 4b) peuvent entourer les ébauches en matière plastique (10) dans un état de thermorégulation selon un angle périphérique qui est compris dans l'ensemble entre 10° et 300° et de préférence entre 10° et 240°.

5. Dispositif selon au moins l'une des revendications précédentes,
**caractérisé en ce que**
le dispositif (1) comprend un système de rotation (18), lequel peut faire tourner l'ébauche en matière plastique (10) autour de l'axe longitudinal de celui-ci.

6. Dispositif selon au moins l'une des revendications précédentes,
**caractérisé en ce que**
le système de retenue (16) comprend un mandrin (26) pouvant être introduit dans une embouchure des ébauches en matière plastique (10).

7. Dispositif selon la revendication 1,
**caractérisé en ce que**
la première partie de moule (4a) et une deuxième partie de moule (4b) sont mobiles l'une par rapport à l'autre dans une direction rectiligne.

8. Dispositif selon la revendication 1,
**caractérisé en ce que**
au moins une partie de moule (4a, 4b) peut être amenée à pivoter autour d'un axe de pivotement prédéfini.

9. Dispositif selon la revendication 1,
**caractérisé en ce que**
le système de déplacement (20) peut déplacer l'ébauche en matière plastique (10) dans la direction longitudinale de celui-ci.

10. Dispositif selon au moins l'une des revendications précédentes,
**caractérisé en ce que**
le dispositif comprend un système de transport (12) destiné à transporter les ébauches en matière plastique (10) le long d'un trajet de transport prédéfini.

11. Dispositif selon au moins l'une des revendications précédentes,
**caractérisé en ce que**
la thermorégulation des ébauches en matière plastique peut être mise en service et/ou hors service.

12. Installation de façonnage d'ébauches en matière plastique (10) de manière à obtenir des récipients en matière plastique ovales, comprenant un système de chauffage (40), lequel peut chauffer les ébauches en matière plastique (10), et un système de façonnage (50) agencé en aval de ce système de chauffage (40) dans une direction de transport des ébauches en matière plastique (10), destiné à façonner les ébauches en matière plastique (10) de manière à obtenir des récipients en matière plastique,
**caractérisée en ce que**
au moins un dispositif de thermorégulation d'ébauches en matière plastique (10) selon au moins l'une des revendications précédentes est agencé entre le système de chauffage (40) et le système de façonnage (50) dans la direction de transport des récipients en matière plastique (10).

13. Procédé de thermorégulation d'ébauches en matière plastique (10) pour la production de récipients ovales, dans lequel les ébauches en matière plastique (10) sont chauffées au moyen d'un système de chauffage (40) puis des zones prédéfinies de la paroi extérieure des ébauches en matière plastique (10) sont thermo-régulées au moyen d'un dispositif (1) de thermorégulation des ébauches en matière plastique (10), de manière à obtenir un profil de température variable dans une direction périphérique et/ou une direction longitudinale des ébauches en matière plastique (10),
dans lequel les ébauches en matière plastique (10) sont introduites dans un moule de thermorégulation (4) afin d'être thermo-régulées et ce moule de thermorégulation (4) comprend au moins une partie de moule (4a) mobile et, pour l'introduction des ébauches en matière plastique, un mouvement relatif entre l'ébauche en matière plastique et au moins une partie de moule (4a) dans une direction longitudinale de l'ébauche en matière plastique (10) est prévu, et dans lequel le dispositif (1) de thermorégulation des ébauches en matière plastique (10) est agencé entre une machine de soufflage (50) et un système de chauffage (40), et les ébauches en matière plastique (10) préalablement chauffées sont refroidies ou chauffées de manière supplémentaire dans des zones définies par rapport à la température ambiante.

14. Procédé selon la revendication 13,
**caractérisé en ce que**
au moins différentes ébauches en matière plastique (10) ou des groupes d'ébauches en matière plastique ne sont pas thermo-régulé(e)s.
